# EUROPÄISCHE PATENTANMELDUNG

(11) **EP 4 737 137 A1**
(43) Veröffentlichungstag der Anmeldung: **06.05.2026**
(21) Anmeldenummer: 25209343.0
(22) Anmeldetag: 17.10.2025
(51) Int. Cl.: B60C 11/03, B60C 11/12

(54) **FAHRZEUGREIFEN**

(30) Priorität: 04.11.2024 DE 102024210569
(71) Anmelder: Continental Reifen Deutschland GmbH, 30175 Hannover (DE)
(72) Erfinder: Micuch, Michal, 020 01 Púchov (SK); Rittweger, Stefan, 30175 Hannover (DE)
(74) Vertreter: Continental Corporation

(57) **Zusammenfassung**

Die Erfindung betrifft einen Fahrzeugreifen mit einem Laufstreifen mit einer Profilblockreihe (2, 2', 2"), welche durch einschnittartige Querrillen (5₁, 5₂, 5₃, 5₄) aus einem Einschnitt (7₁₂, 7₃, 7₄) und einer nutförmigen Einschnitterweiterung (8₁, 8₂, 8₃, 8₄) in blockartige Profilstrukturen (6, 6', 6") gegliedert ist,
wobei die nutförmige Einschnitterweiterung (8₁, 8₂, 8₃, 8₄) von durch den Einschnitt (7₁₂, 7₃, 7₄) getrennten Aussparungen (10, 11, 12) gebildet ist, welche jeweils eine knickfrei zur Umfangsille (3, 4) verlaufende Aussparungskante (10a, 11a, 12a) und einen Boden (10e, 11e, 12e) mit einer Bodenkante (10e', 11e', 12e') aufweisen.

Die eine Aussparung (10, 11, 12) eine kürzere Aussparung (10) und die andere Aussparung (11, 12) eine rippeninnenseitig bezüglich der axialen Richtung über die kürzere Aussparung (10) hinausverlaufende, längere Aussparung (11, 12) ist, wobei die Tiefe (t_{A1}) der kürzeren Aussparung (10) größer ist als die Tiefe (t_{A2}) der längeren Aussparung (11, 12).

## Beschreibung

Die Erfindung betrifft einen Fahrzeugreifen mit einem Laufstreifen mit einer an mindestens einer Seite von einer Umfangsrille begrenzten Profilblockreihe, welche durch einschnittartige Querrillen aus jeweils einem Einschnitt und zumindest einer nutförmigen Einschnitterweiterung in blockartige Profilstrukturen mit Außenflächen gegliedert ist,
wobei der Einschnitt in die Umfangsrille einmündet, Einschnittwände, eine Einschnittmittelfläche, eine Breite von 0,40 mm bis 2,00 mm und eine maximale Tiefe von 70% bis 100% der Profiltiefe aufweist,
wobei die nutförmige Einschnitterweiterung von durch den Einschnitt getrennten, in Draufsicht parallel der Einschnittmittelfläche langgestreckten, an die Einschnittwände angrenzenden, in der jeweiligen blockartigen Profilstruktur ausgeformten Aussparungen gebildet ist, welche jeweils eine knickfrei zur Umfangsille verlaufende Aussparungskante an der Außenfläche der blockartigen Profilstruktur, einen Boden mit einer Bodenkante an der Einschnittwand, eine auf den Boden bezogene, konstante Tiefe von 0,50 mm bis 2,50 mm und eine zwischen der Aussparungskante und der in radialer Richtung in die Laufstreifenperipherie projizierten Bodenkante ermittelte, zumindest an der breitesten Stelle vorliegende Breite von 0,40 mm bis 2,00 mm aufweisen.

Ein derartiger Fahrzeugreifen ist beispielsweise aus der DE 10 2020 204 072 A1 bekannt. Dieser Fahrzeugreifen weist einen Laufstreifen mit einer Profilblockreihe mit einschnittartigen Querrillen auf, welche jeweils aus einem Einschnitt mit einer Breite von 0,40 mm bis 1,2 mm und einer maximale Tiefe von 75% bis 100% der Profiltiefe sowie einer in die Umfangsrille einmündenden, nutförmigen Einschnitterweiterung aus zwei Aussparungen gebildet ist. Die Einschnitterweiterung verbreitert sich in Richtung zu Umfangsrille kontinuierlich. Radial innerhalb der Einschnitterweiterung ist eine Grundanhebung ausgebildet.

Durch die Einschnitterweiterung ist die Wasserableitung von den Einschnitten in die Umfangsrille verbessert, wobei das durch die Grundanhebung reduzierte Wasserdrainagevermögen ausgeglichen wird. In der Folge ist die Griffwirkung der Einschnittkanten auf nassem Untergrund verbessert.

Bei Fahrzeugreifen der eingangs genannten Art sorgen die Einschnitte und die Aussparungen für eine Entwässerung der Profilblockreihe, stellen Griffkanten zur Verfügung und verbessern somit die Nässeperformance des Reifens. Mit den Einschnitten und Aussparungen geht eine Verringerung der Nettokontaktfläche des Laufstreifens sowie eine lokale Reduktion der Profilsteifigkeit einher, sodass die Kraftübertragung vom Laufstreifen auf den Untergrund und daher die Trockenperformance nachlässt. Es besteht daher zwischen der Nässeperformance und der Trockenperformance ein Zielkonflikt, dessen möglichst optimale Lösung wünschenswert ist.

Der Erfindung liegt daher die Aufgabe zugrunde, bei einem Fahrzeugreifen der eingangs genannten Art den zwischen der Nässeperformance und der der Trockenperformance bestehende Zielkonflikt auf merklich höherem Niveau als bisher zu lösen.

Gelöst wird die gestellte Aufgabe erfindungsgemäß dadurch, dass die eine Aussparung der nutförmigen Einschnitterweiterung eine kürzere Aussparung und die andere Aussparung der nutförmigen Einschnitterweiterung eine rippeninnenseitig bezüglich der axialen Richtung über die kürzere Aussparung hinausverlaufende, längere Aussparung ist, wobei die Tiefe der kürzeren Aussparung größer ist als die Tiefe der längeren Aussparung.

Die längere Aussparung trägt zu einer deutlichen Verbesserung der Entwässerung der Profilblockreihe über einen in axialer Richtung breiten Bereich der Profilblockreihe bei. Die kürzere Aussparung, welche von der längeren Aussparung in axialer Richtung überragt ist, sorgt insbesondere durch ihre tiefere Ausführung gegenüber der längeren Aussparung für eine deutlich verstärkte Entwässerung im diesbezüglich kritischen randseitigen Profilblockreihenbereich. Die mit den Aussparungen einhergehende lokale Verringerung der Steifigkeit der Profilblockreihe ist bei der längeren Aussparung durch ihre gegenüber der kürzeren Aussparung seichtere Ausführung und bei der kürzeren Aussparung durch ihre gegenüber der längeren Aussparung kleineren Länge begrenzt. Die vorgesehene Kombination einer kürzeren, tieferen Aussparung und einer längeren, seichteren Aussparung sorgt somit für eine besonders günstige Balance zwischen der Entwässerung und der Steifigkeit der Profilblockreihe, sodass der zwischen der Nässeperformance und der Trockenperformance bestehende Zielkonflikt auf einem höheren Niveau als bisher gelöst ist.

Gemäß einer bevorzugten Ausführung beträgt die Tiefe der kürzeren Aussparung zumindest 150%, bevorzugt zumindest 175%, besonders bevorzugt zumindest 200%, der Tiefe der längeren Aussparung. Dies trägt zu einer guten Entwässerung im randseitigen Profilblockreihenbereich bei.

Gemäß einer weiteren bevorzugten Ausführung ist vorgesehen, dass die Breite der Aussparungen jeweils konstant ist und die Aussparungen somit quaderförmig sind. Die Quaderform sorgt für eine gute Stabilisierung der Aussparung, trägt daher zur Aufrechterhaltung einer hohen Steifigkeit des angrenzenden Gummimaterials bei, sodass die entsprechenden Aussparungskanten wirkungsvolle Griffkanten sind, was sowohl für die Trocken- als auch die Nässeperformance günstig ist.

Bei der letztgenannten bevorzugten Ausführung ist gemäß einer vorteilhaften Weiterentwicklung vorgesehen, dass die Breite der längeren Aussparung kleiner ist als die Breite der kürzeren Aussparung, wobei die Breite der längeren Aussparung insbesondere 70% bis 90% der Breite der kürzeren Aussparung beträgt. Die trägt zu einer weiteren Verbesserung der erläuterten Wirkungsweise der verschiedenen Aussparungen bei, sodass unter Aufrechterhaltung einer für die Trockenperformance günstigen, hohen Steifigkeit der Profilblockreihe die Entwässerungsperformance derselbigen verbessert ist.

Für die Profilstabilität im Bereich der kürzeren Aussparung ist es vorteilhaft, wenn die kürzere Aussparung an der Außenfläche durch die knickfrei zur Umfangsille verlaufende Aussparungskante und eine knickfrei zur angrenzenden Einschnittwand verlaufende Aussparungskante begrenzt ist, wobei die Aussparungskanten L-förmig zueinander verlaufen und einen Winkel von 85° bis 95°, insbesondere von 90°, einschließen. Solche Aussparungskanten unterstützen somit die Aufrechterhaltung einer guten Trockenperformance.

Gemäß einer weiteren bevorzugten Ausführung weist die kürzere Aussparung, in Draufsicht betrachtet, eine auf die zur Umfangsille verlaufende Aussparungskante bezogene, in die axiale Richtung projizierte Länge von 15% bis 30%, insbesondere von 20% bis 25%, der in axialer Richtung an den Außenflächen ermittelten Breite der Profilblockreihe auf. Dies trägt unter Aufrechterhaltung einer hohen Steifigkeit zu einer guten Entwässerung im randseitigen Profilblockreihenbereich bei. Insbesondere wird dadurch auch ein gleichmäßiges Abriebverhalten der Profilblockreihe unterstützt, was vor allem für die Trockenperformance über den Laufstreifenabrieb (Trockenperformance "over lifetime") günstig ist.

Eine vorteilhafte Weiterentwicklung der letztgenannten bevorzugten Ausführung sieht vor, dass die längere Aussparung, in Draufsicht betrachtet, eine auf die zur Umfangsille verlaufende Aussparungskante bezogene, in die axiale Richtung projizierte Länge von zumindest 140% der projizierten Länge der kürzeren Aussparung aufweist. Dies unterstützt die Entwässerung der Profilblockreihe zusätzlich.

Gemäß einer weiteren bevorzugten Ausführung verlaufen die Einschnitte - in Draufsicht betrachtet und bezogen auf eine die Enden der Einschnittmittelfläche verbindende, gerade Hilfslinie - zur axialen Richtung unter einem Winkel von 0° bis 60°, insbesondere von 10° bis 50°. Dies ist - je nach Winkel - für die Griffeigenschaften unter lateraler Belastung und/oder für die Wasserdrainage innerhalb der Einschnitte günstig.

Im Hinblick auf eine möglichst hohe Steifigkeit im randseitigen Profilblockreihenbereich ist es günstig, wenn die Einschnitte angrenzend an die Umfangsrille jeweils mit einer radial innerhalb der nutförmige Einschnitterweiterung ausgebildeten Grundanhebung versehen sind, welche jeweils an ihrer auf der maximalen Tiefe des Einschnitts liegenden Basis, entlang der in radialer Richtung fortgeführten Einschnittmittelfläche eine Länge von 2,0 mm bis 5,0 mm, insbesondere von 2,5 mm bis 4,0 mm, aufweist und in radialer Richtung von einem Grundabschnitt des Einschnittgrunds begrenzt sind, welcher in einer in radialer Richtung ermittelten, konstanten Tiefe von 2,0 mm bis 4,0 mm, insbesondere von 2,5 mm bis 3,5 mm, verläuft. Diese Maßnahme unterstützt ebenfalls ein gleichmäßiges Abriebverhalten der Profilblockreihe, was - wie bereits erwähnt - vor allem für die Trockenperformance über den Laufstreifenabrieb (Trockenperformance "over lifetime") günstig ist.

Ferner ist es für die Profilstabilität im Bereich der Aussparungen von Vorteil, wenn die Aussparungen jeweils von einer Seitenflanke, die an die zur Umfangsrille verlaufende Aussparungskante anschließt, mitbegrenzt sind, wobei die Seitenflanke, im in Draufsicht senkrecht zur Aussparungskante verlaufenden Querschnitt betrachtet, zur radialen Richtung unter einem Winkel von 0° bis 3,0°, insbesondere von bis zu 2,0°, bevorzugt von höchstens 1,0°, verläuft. Dies trägt zu einer hohen Stabilität der Aussparungskante bei, verbessert daher die Nass- und Trockengriffeigenschaften.

Eine weitere bevorzugte Ausführung besteht darin, dass die längere Aussparung über den kompletten Einschnitt verläuft oder dass die längere Aussparung nicht über den kompletten Einschnitt verläuft und vor der Reihenmittelinie der Profilblockreihe endet. Die erstgenannte Variante ist insbesondere im Hinblick auf die Entwässerung der Profilblockreihe vorteilhaft. Die zweitgenannten Variante ist vor allem im Hinblick auf die Trockenperformance günstiger.

Gemäß einer weiteren bevorzugten Ausführung ist vorgesehen, dass in die längere Aussparung eine zur Umfangsrille beabstandete, von der Außenfläche der jeweiligen, blockartigen Profilstruktur ausgehende, oberflächliche Nut einmündet,
- welche eine insbesondere konstante Breite von 0,50 mm bis 1,50 mm,
- in radialer Richtung eine insbesondere konstante Tiefe von 0,50 mm bis 1,50 mm, vorzugsweise von 080 mm bis 1,20 mm, und
- eine auf die Nutmittelfläche bezogene, in die Umfangsrichtung projizierte Länge von 55% bis 90%, insbesondere von mindestens 65%, eines Abstands aufweist, welcher zwischen den an die blockartige Profilstruktur angrenzenden, einschnittartigen Querrillen in Umfangsrichtung ermittelt ist, und
- welche ferner, in Draufsicht betrachtet, bezüglich einer gerade sowie zwischen den Enden der Nutmittelfläche verlaufenden Hilfslinie, zur Umfangsrichtung unter einem Winkel von 0° bis 30°, insbesondere von 10° bis 20°, verläuft.

Beim Fahren auf nasser Fahrbahn sorgen solche Zusatznuten für ein "Brechen" des sich auf der Außenfläche bildenden Flüssigkeitsfilms, sodass die Griffeigenschaften auf nasser Fahrbahn weiter verbessert sind.

Bevorzugter Weise sind einschnittartige Querrillen vorgesehen, deren Einschnitte, in Draufsicht betrachtet, langgestreckt Z-artig verlaufen, insbesondere bezüglicher einer in Draufsicht in der Einschnittmittelfläche liegenden, in radialer Richtung verlaufenden Drehachse drehsymmetrisch sind und sich jeweils aus zwei randseitigen Einschnittabschnitten und einem die Reihenmittellinie der Profilblockreihe passierenden den Z-Mittelbalken bildenden, zentralen Einschnittabschnitt zusammensetzten, wobei die randseitigen Einschnittabschnitte stärker zur Umfangsrichtung geneigt sind als zentrale Einschnittabschnitt und wobei die randseitigen Einschnittabschnitte mit dem zentralen Einschnittabschnitt - bezogen auf die Einschnittmittelfläche M_{E} - jeweils einen Winkel von vorzugsweise 130° bis 150° einschließen, wobei die kürzere Aussparung über einen der randseitigen Einschnittabschnitte und die längere Aussparung über diesen randseitigen Einschnittabschnitt und zumindest einen Abschnitt des zentralen Einschnittabschnitts verläuft. Die Kanten im Bereich des zentralen Einschnittabschnitts sorgen unter Brems- und Traktionsbelastung beim Fahren auf nasser Fahrbahn für eine Verbesserung im Nassgriff, da in Kanten als vorteilhafte "Wisch"- und Griffkanten wirken. Die stärkere Neigung der randseitigen Einschnittabschnitte zur Umfangsrichtung bewirkt, dass die Profilblockreihenrandbereich günstiger Weise gleichmäßig abreiben, was für die Trockenperformance günstig ist.

Für die Nässeperformance ist es ferner günstig, wenn die Einschnitte der einschnittartigen Querrillen die Profilblockreihe durchqueren, wobei die Profilblockreihe vorzugsweise eine an jeder Seite von einer Umfangsrille begrenzte Profilblockreihe ist.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine vereinfachte Draufsicht auf einen in die Ebene abgewickelten Umfangsabschnitt eines Laufstreifens eines Fahrzeugreifens mit einer Ausführungsvariante der Erfindung,
Fig. 2 eine vergrößerte Draufsicht auf das Detail Z₂ der Fig. 1,
Fig. 3 einen Schnitt entlang der Linie **III-III** der Fig. 2,
Fig. 4 eine Draufsicht auf eine Visualisierung eines Einschnitts (Abzugskörper des Einschnitts),
Fig. 5 eine Frontansicht auf den Einschnitt gemäß der in Fig. 4 durch den Pfeil S₅ angedeuteten Sichtrichtung,
Fig. 6 eine stark vergrößerte Draufsicht auf das Detail Z₆ der Fig. 2,
Fig. 7 eine Schrägansicht gemäß in Fig. 6 durch den Pfeil S₇ angedeuteten Sichtrichtung,
Fig. 8 einen Schnitt entlang der Linie VIII-VIII der Fig. 6,
Fig. 9 einen perspektivischen Schnitt entlang der Linie IX-IX der Fig. 6,
Fig. 10 einen Schnitt entlang der Linie X-X der Fig. 2,
Fig. 11 eine vergrößerte Draufsicht auf das Detail Z₁₁ der Fig. 1 und
Fig. 12 eine vergrößerte Draufsicht auf das Detail Z₁₂ der Fig. 1.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf.

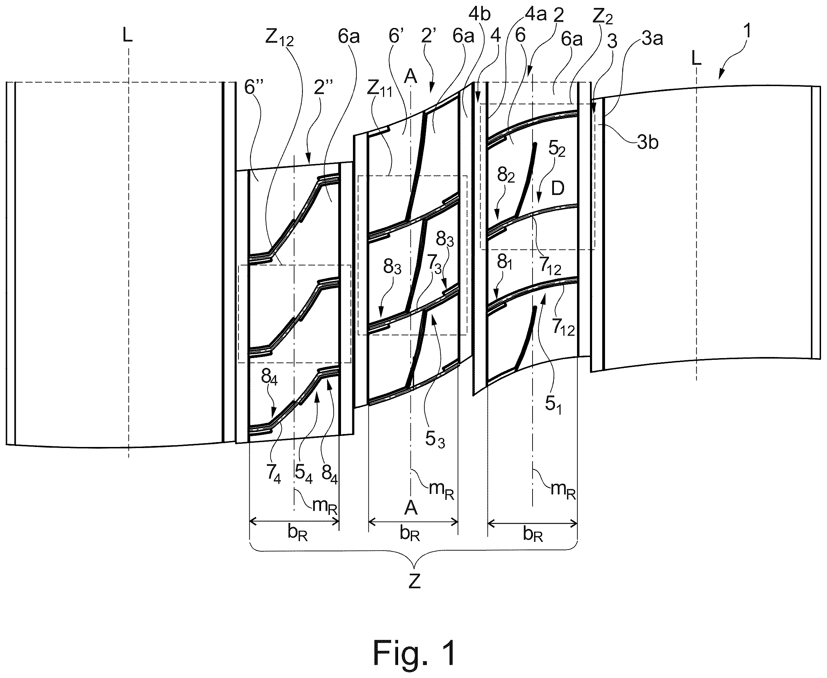

Fig. 1 zeigt eine Draufsicht auf einen vereinfachten, in die Ebene abgewickelten Umfangsabschnitt eines Laufstreifens eines Fahrzeugreifens. Die Reifenäquatorialebene ist durch eine strichpunktierte Linie A-A und die seitlichen Ränder der Bodenaufstandsfläche des Laufstreifens sind durch gestrichelte Linien L angedeutet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm). Der Laufstreifen ist bezüglich der Reifenäquatorialebene (Linie A-A) asymmetrisch ausgeführt.

Der Laufstreifen weist zwei in Fig. 1 vereinfacht dargestellte, schulterseitige Profilrippen 1 und einen zentralen Profilpositivbereich Z mit einer von der Reifenäquatorialebene (Linie A-A) halbierten, mittigen Profilblockreihe 2' und zwei halbmittigen Profilblockreihen 2, 2" auf. Die schulterseitigen Profilrippen 1 sind von der jeweils benachbarten, halbmittigen Profilblockreihe 2, 2" durch je eine schulterseitige Umfangsrille 3 und die mittige Profilblockreihe 2' ist zu den halbmittigen Profilblockreihen 2, 2" durch mittlere Umfangsrillen 4 getrennt.

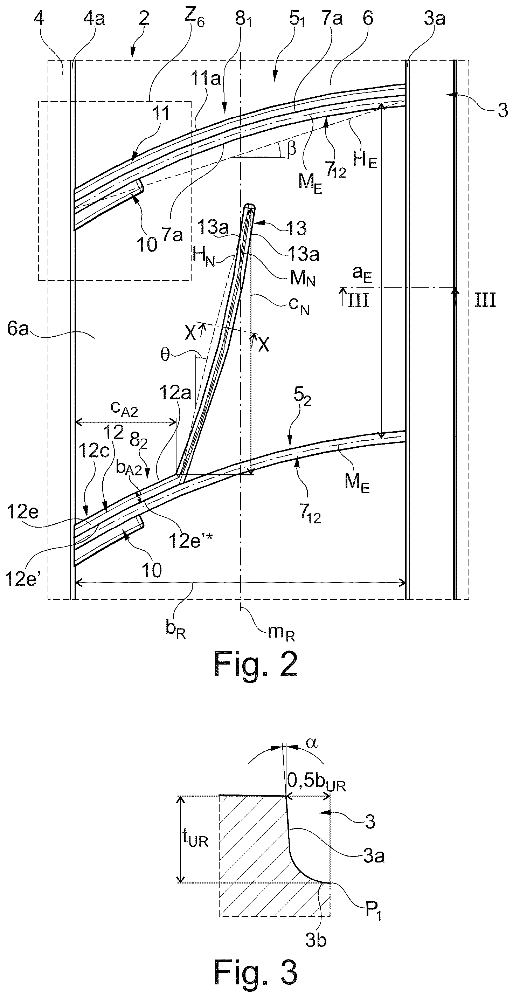

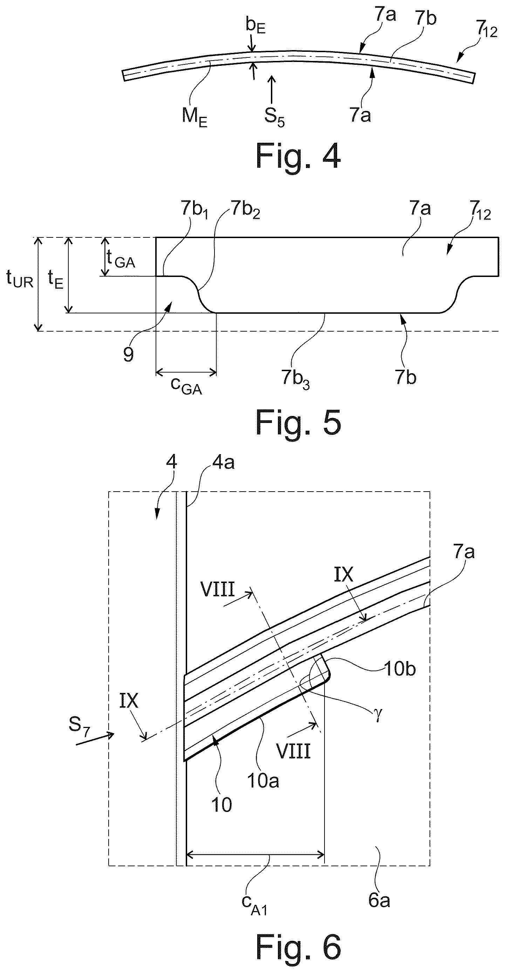

Die Umfangsrillen 3, 4 verlaufen, in Draufsicht betrachtet, gerade, sind in radialer Richtung auf die jeweils vorgesehene, auf den im in axialer Richtung ausgerichteten Querschnitt (vergl. Lage der Linie III-III in Fig. 2) tiefsten Punkt P₁ bezogene Profiltiefe t_{UR} (Fig. 3: Umfangsrille 3, Fig. 5: Zusätzlich eingeblendet) ausgeführt, welche für den bevorzugten Reifentyp üblicherweise 6,5 mm bis 13,0 mm beträgt, weisen eine in Draufsicht in axialer Richtung an der Laufstreifenperipherie ermittelte Breite b_{UR} (Fig. 3: 0,5 b_{UR} für Umfangsrille 3 gezeigt) von 5,0 mm bis 10,0 mm auf und sind durch zwei Rillenflanken 3a (Umfangsrille 3), 4a (Umfangsrillen 4) und einen durch den tiefsten Punkt P₁ (Fig. 3: Umfangsrille 3) verlaufenden, Rillengrund 3b (vergl. Fig. 3), 4b (Umfangsrille 4) begrenzt. Die Rillenflanken 3a, 4a verlaufen, im zuletzt erwähnten Querschnitt betrachtet, gerade sowie zur radialen Richtung unter einem Winkel α (Fig. 3: Rillenflanke 3a) von 0° bis 5°, insbesondere von bis zu 4°. Sind verschieden tief ausgeführte Umfangsrillen 3, 4 vorgesehen, wird unter der Profiltiefe t_{UR} die Tiefe der tiefsten Umfangsrille(n) 3, 4 verstanden.

Die Profilblockreihe 2, 2', 2" weist eine an der Laufstreifenperipherie in axialer Richtung ermittelte Breite b_{R} und eine in Draufsicht in Umfangsrichtung verlaufende, die Breite b_{R} halbierende Reihenmittelline m_{R} auf und ist mit einer Anzahl von über ihre Umfangserstreckung verteilt ausgebildeten, einschnittartigen Querrillen 5₁, 5₂ (Profilblockreihe 2), 5₃ (Profilblockreihe 2'), 5₄ (Profilblockreihe 2") versehen, welche die Profilblockreihe 2, 2', 2" durchqueren, daher in die angrenzenden Umfangsrillen 3, 4 einmünden und Profilblöcke 6 (Profilblockreihe 2), 6' (Profilblockreihe 2'), 6" (Profilblockreihe 2") mit je einer in der Laufstreifenperipherie liegende Blockaußenfläche 6a voneinander trennen. Die einschnittartigen Querrillen 5₁, 5₂ sind in Umfangsrichtung abwechselnd ausgebildet.

Die einschnittartigen Querrillen 5₁, 5₂, 5₃, 5₄ sind jeweils aus einem Einschnitt 7₁₂ (Querrille 5₁, 5₂ ), 7₃ (Querrille 5₃), 7₄ (Querrille 5₄) und einer oberflächlichen, also zur Laufstreifenperipherie offenen, sich beidseitig entlang des Einschnitts 7₁₂, 7₃, 7₄ erstreckenden, nutförmigen Einschnitterweiterung 8₁ (Querrille 5₁), 8₂ (Querrille 5₂) bzw. zwei oberflächlichen Einschnitterweiterungen 8₃ (Querrille 5₃), 8₄ (Querrille 5₄) gebildet.

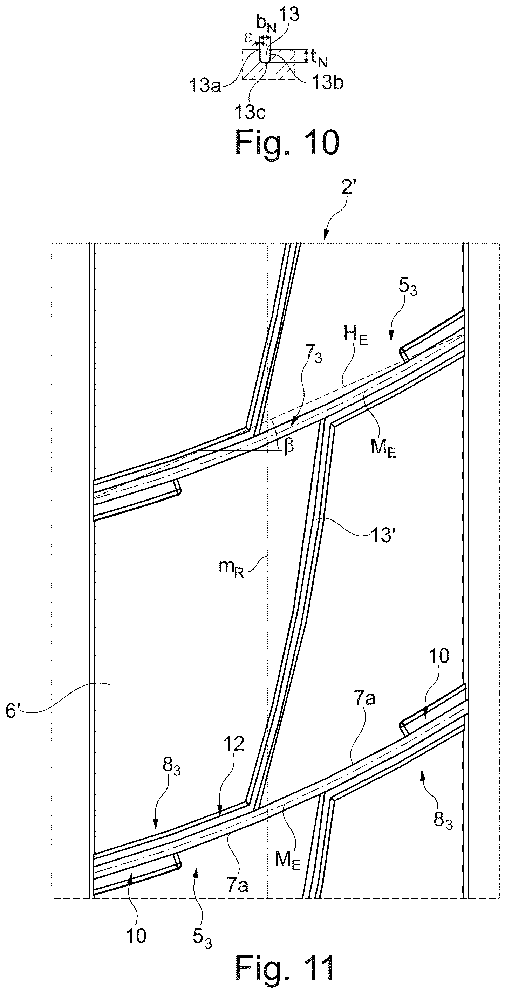

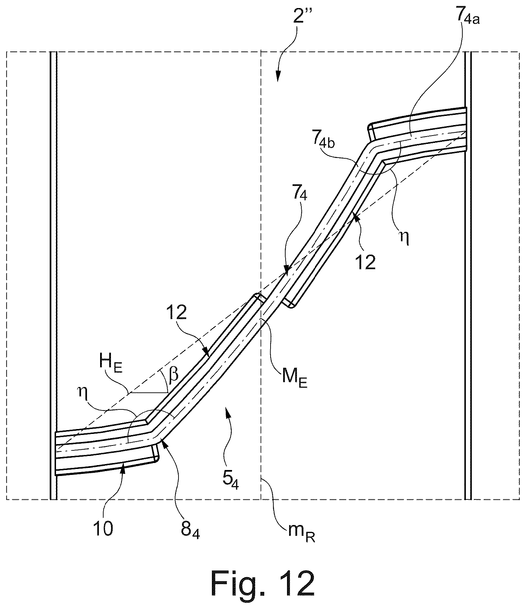

Die Einschnitte 7₁₂, 7₃, 7₄ durchqueren die Profilblockreihe 2, 2', 2", sind jeweils durch zwei in radialer Richtung verlaufende Einschnittwände 7a (Fig. 4, Fig. 5: Gezeigt für Einschnitt 7₁₂) und einen Einschnittgrund 7b (Fig. 5: Gezeigt für Einschnitt 7₁₂) begrenzt, weisen eine in radialer Richtung ausgerichtete, in Draufsicht bezüglich des Einschnittgrunds 7b mittig verlaufende, daher übereinstimmend zu den Einschnittwänden 7a beabstandete, dem Einschnittverlauf folgende Einschnittmittelfläche M_{E} (Fig. 2: Einschnitt 7₁₂, Fig. 11: Einschnitt 7₃, Fig. 12: Einschnitt 7₄), eine als kleinstmöglichen Abstand zwischen den Einschnittwänden 7b ermittelte, konstante Breite b_{E} (Fig. 4: Einschnitt 7₁₂) von 0,40 mm bis 2,00 mm, insbesondere von bis zu 1,60 mm, bevorzugt von 0,60 mm bis 1,20 mm, sowie in radialer Richtung eine maximale Tiefe t_{E} (Tiefe an der tiefsten Stelle, Fig. 5: Einschnitt 7₁₂) von 70% bis 100% der Profiltiefe t_{UR} (Fig. 5), insbesondere von höchstens der um 1,50 mm verringerten Profiltiefe t_{UR}, auf. Gemäß Fig. 2, Fig. 11 und Fig. 12 verlaufen die Einschnitte 7₁₂, 7₃, 7₄ - in Draufsicht betrachtet und bezogen auf eine die Enden der Einschnittmittelfläche M_{E} verbindende, gerade Hilfslinie H_{E} - zur axialen Richtung unter einem Winkel β von 0° bis 60°, insbesondere von 10° bis 50°, wobei die Einschnitte 7₁₂, 7₃, 7₄ innerhalb der jeweiligen Profilblockreihe 2, 2', 2" bei von 0° abweichenden Winkeln β, wie auch beim Ausführungsbeispiel vorgesehen, bezüglich der Hilfslinien H_{E} zur Umfangsrichtung gleichsinnig geneigt sind und bezüglich der Einschnittmittelflächen M_{E} vorzugsweise parallel zueinander verlaufen. Ferner sind die Einschnitte 7₁₂, 7₃, 7₄, welche sich in verschiedenen Profilblockreihe 2, 2', 2" befinden, bezüglich der Hilfslinien H_{E} gleichsinnig zur Umfangsrichtung geneigt, wobei die Einschnitte 7₁₂, 7₃, 7₄ rechtssteigend verlaufen. Einschnitte 7₁₂, 7₃, 7₄, welche innerhalb der jeweiligen Profilblockreihe 2, 2', 2" in Umfangsrichtung aufeinanderfolgen, weisen auf die Einschnittmittelflächen M_{E} bezogene, in Umfangsrichtung ermittelte Abstände a_{E} (kleinstmögliche Abstände, Fig. 2: Einschnitte 7₁₂) von insbesondere 20,0 mm bis 40,0 mm auf.

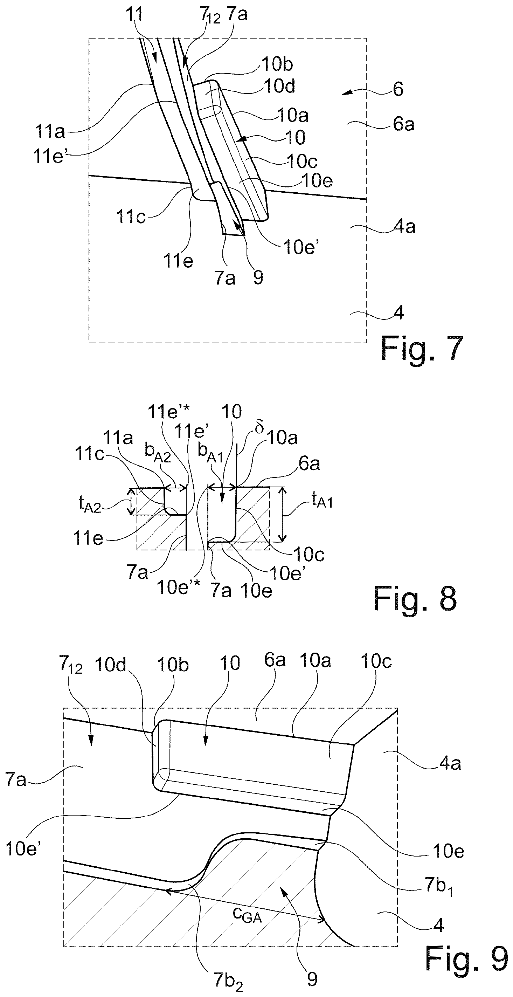

Die Einschnitte 7₁₂, 7₃, 7₄ sind - wie Fig. 5, Fig. 7 und Fig. 9 insbesondere in Kombination für einen Einschnitt 7₁₂ zeigen - mit an den jeweiligen Umfangsrillen 3, 4 angrenzenden, lokalen Grundanhebungen 9 versehen, welche jeweils an ihrer auf der maximalen Tiefe t_{E} (Fig. 5) des Einschnitts 7₁₂, 7₃, 7₄ liegenden Basis, entlang der in radialer Richtung fortgeführten Einschnittmittelfläche M_{E} (vergl. Fig. 4) eine Länge c_{GA} (Fig. 5, Fig. 9) von 2,0 mm bis 5,0 mm, insbesondere von 2,5 mm bis 4,0 mm, aufweisen und an der jeweiligen Umfangsrille 3, 4 von der Rillenflanke 3a, 4a (Fig. 7, Fig. 9: Gezeigt für Grundanhebung 9 an einer Rillenflanke 4a) sowie innerhalb des Einschnitts 7₁₂, 7₃, 7₄ in radialer Richtung von einem Grundabschnitt 7b₁ des Einschnittgrunds 7b (Fig. 5, Fig. 9) und rippeninnenseitig von einem Grundabschnitt 7b₂ des Einschnittgrunds 7b (Fig. 5, Fig. 9) begrenzt sind. Gemäß Fig. 5 verläuft der Grundabschnitt 7b₁ in einer in radialer Richtung ermittelten, konstanten Tiefe t_{GA} von 2,0 mm bis 4,0 mm, insbesondere von 2,5 mm bis 3,5 mm. Der Grundabschnitt 7b₂ verläuft, im entlang der Einschnittmittelfläche M_{E} ausgerichteten Schnitt betrachtet, S-förmig geschwungen und schließt tangential an den Grundabschnitt 7b₁ sowie tangential an einen in der maximalen Tiefe t_{E} verlaufenden Grundabschnitt 7b₃ an.

Die weitere Ausgestaltung der einschnittartigen Querrillen 5₁, 5₂, 5₃, 5₄, also der Einschnitte 7₁₂, 7₃, 7₄ und der Einschnitterweiterungen 8₁, 8₂, 8₃, 8₄, wird nachfolgend unter Bezugnahme auf einzelne Einschnitte 7₁₂, 7₃, 7₄ und einzelne Einschnitterweiterungen 8₁, 8₂, 8₃, 8₄ erläutert. Dabei wird zunächst auf die in der Profilblockreihe 2 vorgesehenen Querrillen 5₁, 5₂, nachfolgend auf die in der Profilblockreihe 2' vorhandenen Querrillen 5₃ und anschließend auf die in der Profilblockreihe 2" verlaufenden Querrillen 5₄ eingegangen.

### Zur Profilblockreihe 2 (Querrillen 5₁, 5₂)

Gemäß Fig. 2 verlaufen die Einschnitte 7₁₂ der einschnittartigen Querrillen 5₁, 5₂ - in Draufsicht betrachtet und bezogen auf die Einschnittmittelflächen M_{E} - durchgehend gebogen (wendepunktfrei, bogenförmig), sodass die eine Einschnittwand 7a die bogeninnenseitige Einschnittwand 7a und die andere Einschnittwand 7a die bogenaußenseitige Einschnittwand 7a ist. Die bogeninnenseitige Einschnittwand 7a ist jene, welche von der Hilfslinie H_{E} geschnitten ist, und die bogenaußenseitige Einschnittwand 7a ist jene, welche von der Hilfslinie H_{E} nicht geschnitten ist.

Die zur einschnittartigen Querrille 5₁ gehörende Einschnitterweiterung 8₁ ist aus einer über einen Abschnitt der bogeninnenseitigen Einschnittwand 7a verlaufenden, am jeweiligen Profilblock 6 ausgebildeten, in Draufsicht parallel zur Einschnittmittelfläche M_{E} langgestreckt quaderförmigen, kürzeren Aussparung 10 und einer entlang der kompletten bogenaußenseitigen Einschnittwand 7a verlaufenden, in Draufsicht parallel zur Einschnittmittelfläche M_{E} langgestreckte quaderförmigen, gegenüber der Aussparung 10 längeren Aussparung 11 gebildet.

Die kürzere Aussparung 10 mündet in die jeweilige mittlere Umfangsrille 4 ein, endet rippeninnenseitig innerhalb der halbmittigen Profilblockreihe 2 und weist gemäß Fig. 6 und Fig. 7 an der jeweiligen Blockaußenfläche 6a zwei in Draufsicht knickfreie sowie L-förmige zueinander verlaufende Aussparungskanten - nämlich eine zur Rillenflanke 4a sowie beim Ausführungsbeispiel kaum merkbar durchgehend gebogen (wendepunktfrei, bogenförmig) sowie parallel zur Einschnittmittelfläche M_{E} verlaufende, den längeren L-Balken bildende Aussparungskante 10a und eine gerade sowie zur bogeninnenseitigen Einschnittwand 7a verlaufende, den kürzeren L-Balken bildende Aussparungskante 10b auf, wobei der Übergang zwischen den Aussparungskanten 10a, 10b verrundet ausgeführt ist und die Aussparungskanten 10a, 10b einen am Niveau der Blockaußenfläche 6a ermittelten Winkel γ (Fig. 6) von 85° bis 95°, insbesondere von 90°, einschließen. Der Winkel γ bezieht sich auf eine an die Aussparungskante 10a angelegte Tangente (nicht eingezeichnet), welche durch das der Aussparungskante 10b zugewandte Kantenende der Aussparungskante 10a verläuft.

Gemäß Fig. 7 bis Fig. 9 ist die kürzere Aussparung 10 durch eine an die den längeren L-Balken bildende Aussparungskante 10a anschließende Seitenflanke 10c, eine an die den kürzeren L-Balken bildende Aussparungskante 10b anschließende Endflanke 10d (Fig. 7, Fig. 9) und in radialer Richtung durch einen Boden 10e mit einer an der bogeninnenseitigen Einschnittwand 7a liegenden Bodenkante 10e' begrenzt. Die Seitenflanke 10c und Endflanke 10d verlaufen, im in Draufsicht senkrecht zur zugehörigen Aussparungskante 10a (Seitenflanke 10c), 10b (Endflanke 10d) verlaufenden Schnitt betrachtet, zur radialen Richtung jeweils unter einem Winkel δ (Fig.8: Gezeigt für Seitenflanke 10c; vergl. Lage der Linie VIII-VIII in Fig. 6) von 0° bis 3,0°, insbesondere von bis zu 2,0°, bevorzugt von höchstens 1,0°. "Senkrecht zur Aussparungskante 10a" bedeutet senkrecht zu einer an die jeweilige Stelle der Aussparungskante 10a angelegte Tangente. Der Boden 10e und dessen Bodenkante 10e' verlaufen jeweils parallel zu den Blockaußenflächen 6a. Die Aussparung 10 weist eine auf die Aussparungskante 10a bezogene, in die axiale Richtung projizierte Länge c_{A1} (Fig. 6) von 15% bis 30%, insbesondere von 20% bis 25%, der Breite b_{R} der halbmittigen Profilblockreihe 2, eine in Draufsicht als kleinstmöglichen Abstand zwischen der Aussparungskante 10a und einer in radialer Richtung ins Niveau der Blockaußenflächen 6a projizierten Bodenkante 10e'* (Fig. 8) ermittelte Breite b_{A1} (Fig. 8) von 0,70 mm bis 2,00 mm, insbesondere von 0,80 mm bis 1,50 mm, bevorzugt von bis zu 1,20 mm, und eine gegenüber dem Niveau der Blockaußenfläche 6a in radialer Richtung ermittelte, auf die Bodenkante 10e', daher auch auf den Boden 10e, bezogene, konstante Tiefe t_{A1} (Fig. 8) von 1,50 mm bis 2,50 mm, insbesondere von 1,70 mm bis 2,30 mm, auf.

Gemäß Fig. 2 mündet die längere Aussparung 11 in beide an die halbmittige Profilblockreihe 2 angrenzende Umfangsrillen 3, 4 ein, wobei die Aussparung 11 an der entsprechenden Blockaußenfläche 6a eine in Draufsicht durchgehend gebogen, parallel zur Einschnittmittelfläche M_{E} sowie zwischen den Rillenflanken 3a, 4a der Umfangsrillen 3, 4 verlaufende Aussparungskante 11a aufweist.

Gemäß Fig. 7 und Fig. 8 ist die längere Aussparung 11 (in Fig. 8 nicht beziffert) durch eine an die Aussparungskante 11a anschließende Seitenflanke 11c und in radialer Richtung durch einen Boden 11e mit einer an der bogenaußenseitigen Einschnittwand 7a liegenden Bodenkante 11e' begrenzt. Die Seitenflanke 11c verläuft, im in Draufsicht senkrecht zur Aussparungskante 11a verlaufenden Querschnitt betrachtet (vergl. Lage der Linie VIII-VIII in Fig. 6), in radialer Richtung (Fig. 8). "Senkrecht zur Aussparungskante 11a" bedeutet senkrecht zu einer an die jeweilige Stelle der Aussparungskante 11a angelegten Tangente. Der Boden 11e und dessen Bodenkante 11e' verlaufen jeweils parallel zu den Blockaußenflächen 6a. Die Aussparung 11 weist eine in Draufsicht als kleinstmöglichen Abstand zwischen der Aussparungskante 11a und der ins Niveau der Blockaußenflächen 6a in radialer Richtung projizierten Bodenkante 11e'* (Fig. 8) ermittelte Breite b_{A2} (Fig. 8) von 0,40 mm bis 1,00 mm, insbesondere von zumindest 0,60 mm, und eine gegenüber dem Niveau der Blockaußenfläche 6a in radialer Richtung ermittelte, auf die Bodenkante 10e', daher auch auf den Boden 10e, bezogene konstante Tiefe t_{A2} (Fig. 8) von 0,50 mm bis 1,50 mm, insbesondere von 0,70 mm bis 1,30 mm, auf.

Die kürzere Aussparung 10 ist - jeweils gegenüber der längeren Aussparung 11 - tiefer und breiter ausgeführt, sodass die Tiefe t_{A1} der kürzeren Aussparung 10 größer ist als die Tiefe t_{A2} der längeren Aussparung 11 und die Breite b_{A1} der kürzeren Aussparung 10 größer ist als die Breite b_{A2} der längeren Aussparung 11. Die Tiefe t_{A1} beträgt insbesondere zumindest 150%, bevorzugt zumindest 175%, besonders bevorzugt zumindest 200%, der Tiefe t_{A2}. Die Breite b_{A2} beträgt insbesondere 70% bis 90% der Breite b_{A1}.

Wie Fig. 2 ferner zeigt, ist die zur einschnittartigen Querrille 5₂ gehörende Einschnitterweiterung 8₂ aus einer kürzeren Aussparung 10 (übereinstimmend zur Einschnitterweiterung 8₁) und einer längeren Aussparung 12 gebildet. Die längere Aussparung 12 weist - analog zur längeren Aussparung 11 (Einschnitterweiterung 8₁) - eine parallel zur Einschnittmittelfläche M_{E} verlaufende Aussparungskante 12a, eine Seitenflanke 12c und einen Boden 12e mit einer Bodenkante 12e' auf, läuft in Draufsicht rippeninnenseitig über die Aussparung 10 hinaus und unterscheidet sich von der längeren Aussparung 11 (Einschnitterweiterung 8₁) dadurch, dass sie ausschließlich in die mittlere Umfangsrille 4 einmündet und rippeninnenseitig in einem in axialer Richtung ermittelten Abstand vor der Reihenmittellinie m_{R} endet, wobei sie sich ferner im Hinblick auf einige ihrer Abmessungen, wie nachfolgend erläutert, unterscheidet. Die Aussparung 12 weist eine auf die Aussparungskante 12a bezogene, in die axiale Richtung projizierte Länge c_{A2} von 140% bis 160% der Länge c_{A1} der Aussparung 10 (Fig. 6), eine in Draufsicht als kleinstmöglichen Abstand zwischen der Aussparungskante 12a und der ins Niveau der Blockaußenflächen 6a in radialer Richtung projizierten Bodenkante 12e'* (fällt in Fig. 2 mit der Bodenkante 12e' zusammen) ermittelte Breite b_{A2} (Größe übereinstimmend zur Breite b_{A2} der Aussparung 11) und eine gegenüber dem Niveau der Blockaußenfläche 6a in radialer Richtung ermittelte auf die Bodenkante 10e', daher auch auf den Boden 10e, bezogene, konstante Tiefe t_{A2} (Fig. 8: Gezeigt für Aussparung 11, Größe übereinstimmend zur Tiefe t_{A2} der Aussparung 11) auf. Die projizierten Längen c_{A1}, c_{A2} sind ergänzend insbesondere derart aufeinander abgestimmt, dass die projizierte Länge c_{A2} höchstens 40%, insbesondere höchstens 35%, der Breite b_{R} der Profilblockreihe 2 beträgt.

Gemäß Fig. 2 ist in jedem an eine längere Aussparung 12 angrenzenden Profilblock 6 je eine zu beiden Umfangsrillen 3, 4 beabstandete oberflächliche Nut 13 ausgebildet, welche einseitig geschlossen im Profilblock 6 endet, an das rippeninnseitige Ende der längeren Aussparung 12 anschließt, an der Blockaußenfläche 6a zwei parallel zueinander verlaufende Nutkanten 13a (vergl. Fig. 10) und eine in Draufsicht übereinstimmend zu den Nutkanten 13a beabstandete, die Reihenmittellinie m_{R} einmal kreuzende Nutmittelfläche M_{N} aufweist. Gemäß Fig. 10 ist die Nut 13 durch an die Nutkanten 13a anschließende, im in Draufsicht senkrecht zur Nutmittelfläche M_{N} verlaufenden Querschnitt gerade sowie zur radialen Richtung unter einem Winkel ε von 0° bis 2°, insbesondere von 0°, verlaufende Nutflanken 13b und einen U-förmig gerundeten Nutgrund 13c begrenzt. Die Nut 13 verläuft gemäß Fig. 2, in Draufsicht betrachtet, bezüglich einer gerade sowie zwischen den Enden der Nutmittelfläche M_{N} verlaufenden Hilfslinie H_{N} zur Umfangsrichtung unter einem Winkel θ von 0° bis 30°, insbesondere von 10° bis 20°, weist gemäß Fig. 10 eine als kleinstmöglichen Abstand zwischen den Nutkanten 13a ermittelte, konstante Breite b_{N} von 0,50 mm bis 1,50 mm, in radialer Richtung eine konstante Tiefe t_{N} von 0,50 mm bis 1,50 mm, insbesondere von 0,80 mm bis 1,20 mm, und gemäß Fig. 2 in Draufsicht eine auf Nutmittelfläche M_{N} bezogene, in die Umfangsrichtung projizierte Länge c_{N} von 55% bis 90%, insbesondere von zumindest 65%, des Abstands a_{E} zwischen den an den jeweiligen Profilblock 6 angrenzenden Einschnitten 7₁₂ auf. Die Tiefe t_{N} der Nut 13 stimmt vorzugsweise mit der Tiefe t_{A2} der Aussparung 12 überein, sodass der Nutgrund 13c tangential an den Boden 12e der Aussparung 12 anschließt.

### Zur Profilblockreihe 2' (Querrillen 5₃)

Gemäß Fig. 1 und Fig. 11 unterscheiden sich die Einschnitte 7₃ der einschnittartigen Querrillen 5₃ von den Einschnitten 7₁₂ der einschnittartigen Querrillen 5₁, 5₂ dadurch, dass die Einschnitte 7₃ zu den Einschnitte 7₁₂ - in Draufsicht betrachtet und bezogen auf die Einschnittmittelflächen M_{E} (Fig. 11) - eine bezüglich der Umfangsrichtung entgegengesetzte Biegung aufweisen.

Gemäß Fig. 11 sind die beiden Einschnitterweiterungen 8₃ der einschnittartigen Querrille 5₃ analog zur Einschnitterweiterung 8₂ (Fig. 2) der einschnittartigen Querrille 5₂ (Fig. 2) ausgebildet, wobei die kürzere Aussparung 10 der einen Einschnitterweiterung 8₃ entlang der bogeninnenseitigen Einschnittwand 7a und die kürzere Aussparung 10 der anderen Einschnitterweiterung 8₃ entlang der bogenaußenseitigen Einschnittwand 7a ausgebildet ist.

In jedem Profilblock 6' ist eine oberflächliche Nut 13' ausgebildet, welche sich von der Nut 13 (Fig. 2) dadurch unterscheidet, dass sie sich zwischen den rippeninnseitigen Enden der längeren Aussparungen 12 erstreckt und den Profilblock 6' daher quert.

### Zur Profilblockreihe 2" (Querrillen 5₄)

Gemäß Fig. 12 verläuft der Einschnitt 7₄ jeder einschnittartigen Querrille 5₄, in Draufsicht betrachtet, langgestreckt gespiegelt Z-artig, ist bezüglicher einer in Draufsicht in radialer Richtung verlaufenden Drehachse (nicht eingezeichnet) im Wesentlichen drehsymmetrisch und setzt sich aus zwei kaum merkbar gebogen verlaufenden, randseitigen Einschnittabschnitten 7₄ₐ und einem die Reihenmittellinie m_{R} passierenden, kaum merkbar gebogen verlaufenden, den Z-Mittelbalken bildenden, zentralen Einschnittabschnitt 7_{4b} zusammen, wobei die randseitigen Einschnittabschnitte 7₄ₐ stärker zur Umfangsrichtung geneigt sind als zentrale Einschnittabschnitt 7_{4b} und wobei die randseitigen Einschnittabschnitte 7₄ₐ mit dem zentrale Einschnittabschnitt 7_{4b} - bezogen auf die Einschnittmittelfläche M_{E} - jeweils einen Winkel η von 130° bis 150° einschließen.

Die beiden Einschnitterweiterungen 8₄ sind analog zur Einschnitterweiterung 8₂ (Fig. 2) der einschnittartigen Querrille 5₂ (Fig. 2) ausgebildet, wobei die kürzere Aussparung 10 über den jeweiligen, kompletten randseitigen Einschnittabschnitt 7₄ₐ und die längere Aussparung 12 über die Knickinnenseite, den kompletten, jeweiligen randseitigen Einschnittabschnitt 7₄ₐ und über einen Abschnitt des zentralen Einschnittabschnitts 7_{4b} verläuft und insbesondere vor der Reihenmittellinie m_{R} endet.

Die Erfindung ist auf die beschriebenen Ausführungsbeispiele nicht beschränkt.

Der Laufstreifen weist zumindest eine an mindestens einer Seite von einer Umfangsrille begrenzte Profilblockreihe mit einschnittartigen Querrillen auf, welche an der Umfangsrille eine Einschnitterweiterung aufweisen. Bei schulterseitigen Profilblockreihen ist die Breite b_{R} innerhalb der Bodenaufstandsfläche ermittelt, sodass sich diese auf den seitlichen Rand der Bodenaufstandsfläche (Linie L) bezieht. Die Zusatznuten sind optional. Ferner sind auch die Grundanhebungen in den einschnittartigen Querrillen optional. Die Profilblockreihe ist vorzugsweise eine beidseitig von Umfangsrillen begrenzte Profilblockreihe. Die einschnittartigen Querrillen können einseitig innerhalb der Profilblockreihe enden. Vorzugsweise durchqueren die einschnittartigen Querrillen die Profilblockreihe, wobei bei schulterseitigen Profilblockreihen unter solchen Querrillen jene verstanden werden, welche die schulterseitige Profilblockreihe innerhalb der Bodenaufstandsfläche durchqueren.

### Bezugszeichenliste

- 1: schulterseitige Profilrippe
- 2: halbmittige Profilblockreihe
- 2': mittige Profilblockreihe
- 2": halbmittige Profilblockreihe
- 3: schulterseitige Umfangsrille
- 3a: Rillenflanke
- 3b: Rillengrund
- 4: mittlere Umfangsrille
- 4a: Rillenflanke
- 4b: Rillengrund
- 5₁, 5₂, 5₃, 5₄: einschnittartige Querrille
- 6, 6', 6": Profilblock
- 6a: Blockaußenfläche
- 7₁₂, 7₃, 7₄: Einschnitt
- 7₄ₐ: randseitiger Einschnittabschnitt
- 7_{4b}: zentraler Einschnittabschnitt
- 7a: Einschnittwand
- 7b: Einschnittgrund
- 7b₁, 7b₂, 7b₃: Grundabschnitt
- 8₁, 8₂, 8₃, 8₄: Einschnitterweiterung
- 9: Grundanhebung
- 10: kürzere Aussparung
- 10a: Aussparungskante
- 10b: Aussparungskante
- 10c: Seitenflanke
- 10d: Endflanke
- 10e: Boden
- 10e': Bodenkante
- 10e'*: projizierte Bodenkante
- 11: längere Aussparung
- 11a: Aussparungskante
- 11c: Seitenflanke
- 11e: Boden
- 11e': Bodenkante
- 11e'*: projizierte Bodenkante
- 12: längere Aussparung
- 12a.: Aussparungskante
- 12c: Seitenflanke
- 12e: Boden
- 12e': Bodenkante
- 12e'*: projizierte Bodenkante
- 13, 13': oberflächliche Nut
- 13a: Nutkante
- 13b: Nutflanke
- 13c: Nutgrund
- A-A: Linie (Reifenäquatorialebene)
- a_{E}: Abstand
- b_{A1}, b_{A2}, b_{E}, b_{N}, b_{R}, b_{UR}: Breite
- c_{A1}, c_{A2}, c_{N}: projizierte Länge
- c_{GA}: Länge
- H_{E}, H_{N}: Hilfslinie
- L: Linie (seitlicher Rand der Bodenaufstandsfläche)
- M_{E}: Einschnittmittelfläche
- M_{N}: Nutmittelfläche
- m_{R}: Reihenmittellinie
- P₁: tiefster Punkt
- S₅, S₇: Pfeil (Sichtrichtung)
- t_{E}: maximale Tiefe
- t_{A1}, t_{A2}, t_{GA}, t_{N}: Tiefe
- t_{UR}: Profiltiefe
- Z: zentraler Profilpositivbereich
- Z₂, Z₆, Z₁₁, Z₁₂: Detail
- S₅, S₇: Pfeil (Sichtrichtung)
- α, β, γ, δ, ε, η, θ: Winkel

## Patentansprüche

1. Fahrzeugreifen mit einem Laufstreifen mit einer an mindestens einer Seite von einer Umfangsrille (3, 4) begrenzten Profilblockreihe (2, 2', 2"), welche durch einschnittartige Querrillen (5₁, 5₂, 5₃, 5₄) aus jeweils einem Einschnitt (7₁₂, 7₃, 7₄) und zumindest einer nutförmigen Einschnitterweiterung (8₁, 8₂, 8₃, 8₄) in blockartige Profilstrukturen (6, 6', 6") mit Außenflächen (6a) gegliedert ist,
wobei der Einschnitt (7₁₂, 7₃, 7₄) in die Umfangsrille (3, 4) einmündet, Einschnittwände (7a), eine Einschnittmittelfläche (M_{E}), eine Breite (b_{E}) von 0,40 mm bis 2,00 mm und eine maximale Tiefe (t_{E}) von 70% bis 100% der Profiltiefe (t_{UR}) aufweist,
wobei die nutförmige Einschnitterweiterung (8₁, 8₂, 8₃, 8₄) von durch den Einschnitt (7₁₂, 7₃, 7₄) getrennten, in Draufsicht parallel der Einschnittmittelfläche (M_{E}) langgestreckten, an die Einschnittwände (7a) angrenzenden, in der jeweiligen blockartigen Profilstruktur (6, 6', 6") ausgeformten Aussparungen (10, 11, 12) gebildet ist, welche jeweils eine knickfrei zur Umfangsille (3, 4) verlaufende Aussparungskante (10a, 11a, 12a) an der Außenfläche (6a) der blockartigen Profilstruktur (6, 6', 6"), einen Boden (10e, 11e, 12e) mit einer Bodenkante (10e', 11e', 12e') an der Einschnittwand (7a), eine auf den Boden (10e, 11e, 12e) bezogene, konstante Tiefe (t_{A1}, t_{A2}) von 0,50 mm bis 2,50 mm und eine zwischen der Aussparungskante (10a, 10b, 11a, 12a) und der in radialer Richtung in die Laufstreifenperipherie projizierten Bodenkante (10e'*, 11e'*, 12e'*) ermittelte, zumindest an der breitesten Stelle vorliegende Breite (b_{A1}, b_{A2}) von 0,40 mm bis 2,00 mm aufweisen,
**dadurch gekenzeichnet**,
dass die eine Aussparung (10, 11, 12) der nutförmigen Einschnitterweiterung (8₁, 8₂, 8₃, 8₄) eine kürzere Aussparung (10) und die andere Aussparung (11, 12) der nutförmigen Einschnitterweiterung (8₁, 8₂, 8₃, 8₄) eine rippeninnenseitig bezüglich der axialen Richtung über die kürzere Aussparung (10) hinausverlaufende, längere Aussparung (11, 12) ist, wobei die Tiefe (t_{A1}) der kürzeren Aussparung (10) größer ist als die Tiefe (t_{A2}) der längeren Aussparung (11, 12).

2. Fahrzeugreifen nach Anspruch 1, **dadurch gekennzeichnet, dass** die Tiefe (t_{A1}) der kürzeren Aussparung (10) zumindest 150%, bevorzugt zumindest 175%, besonders bevorzugt zumindest 200%, der Tiefe (t_{A2}) der längeren Aussparung (11, 12) beträgt.

3. Fahrzeugreifen nach Anspruch 1 oder 2, **dadurch gekennzeichnet, dass** die Breite (b_{A1}, b_{A2}) der Aussparungen (10, 11, 12) jeweils konstant ist und die Aussparungen (10, 11, 12) somit quaderförmig sind.

4. Fahrzeugreifen nach Anspruch 3, **dadurch gekennzeichnet, dass** die Breite (b_{A2}) der längeren Aussparung (11, 12) kleiner ist als die Breite (b_{A1}) der kürzeren Aussparung (10), wobei die Breite (b_{A2}) der längeren Aussparung (11, 12) insbesondere 70% bis 90% der Breite (b_{A1}) der kürzeren Aussparung (10) beträgt.

5. Fahrzeugreifen nach einem der Ansprüche 1 bis 4, **dadurch gekennzeichnet, dass** die kürzere Aussparung (10) an der Außenfläche (6a) durch die knickfrei zur Umfangsille (3, 4) verlaufende Aussparungskante (10a) und eine knickfrei zur angrenzenden Einschnittwand (7a) verlaufende Aussparungskante (10b) begrenzt ist, wobei die Aussparungskanten (10a, 10b) L-förmig zueinander verlaufen und einen Winkel (γ) von 85° bis 95°, insbesondere von 90°, einschließen.

6. Fahrzeugreifen nach einem der Ansprüche 1 bis 5, **dadurch gekennzeichnet, dass** die kürzere Aussparung (10), in Draufsicht betrachtet, eine auf die zur Umfangsille (3, 4) verlaufende Aussparungskante (10a) bezogene, in die axiale Richtung projizierte Länge (c_{A1}) von 15% bis 30%, insbesondere von 20% bis 25%, der in axialer Richtung an den Außenflächen (6a) ermittelten Breite (b_{R}) der Profilblockreihe (2, 2', 2") aufweist.

7. Fahrzeugreifen nach Anspruch 6, **dadurch gekennzeichnet, dass** die längere Aussparung (11, 12), in Draufsicht betrachtet, eine auf die zur Umfangsille (3, 4) verlaufende Aussparungskante (11a, 12a) bezogene, in die axiale Richtung projizierte Länge (c_{A2}) von zumindest 140% der projizierten Länge (c_{A1}) der kürzeren Aussparung (10) aufweist.

8. Fahrzeugreifen nach einem der Ansprüche 1 bis 7, **dadurch gekennzeichnet, dass** die Einschnitte (7₁₂, 7₃, 7₄) - in Draufsicht betrachtet und bezogen auf eine die Enden der Einschnittmittelfläche (M_{E}) verbindende, gerade Hilfslinie (H_{E}) - zur axialen Richtung unter einem Winkel (β) von 0° bis 60°, insbesondere von 10° bis 50°, verlaufen.

9. Fahrzeugreifen nach einem der Ansprüche 1 bis 8, **dadurch gekennzeichnet, dass** die Einschnitte (7₁₂, 7₃, 7₄) angrenzend an die Umfangsrille (3, 4) jeweils mit einer radial innerhalb der nutförmige Einschnitterweiterung (8₁, 8₂, 8₃, 8₄) ausgebildeten Grundanhebung (9) versehen sind, welche jeweils an ihrer auf der maximalen Tiefe (t_{E}) des Einschnitts (7₁₂, 7₃, 7₄) liegenden Basis, entlang der in radialer Richtung fortgeführten Einschnittmittelfläche (M_{E}) eine Länge (c_{GA}) von 2,0 mm bis 5,0 mm, insbesondere von 2,5 mm bis 4,0 mm, aufweist und in radialer Richtung von einem Grundabschnitt (7b₁) des Einschnittgrunds (7b) begrenzt sind, welcher in einer in radialer Richtung ermittelten, konstanten Tiefe (t_{GA}) von 2,0 mm bis 4,0 mm, insbesondere von 2,5 mm bis 3,5 mm, verläuft.

10. Fahrzeugreifen nach einem der Ansprüche 1 bis 9, **dadurch gekennzeichnet, dass** die Aussparungen (10, 11, 12) jeweils von einer Seitenflanke (10c, 11c, 12c), die an die zur Umfangsrille (3, 4) verlaufende Aussparungskante (10a, 11a, 12a) anschließt, mitbegrenzt sind, wobei die Seitenflanke (10c, 11c, 12c), im in Draufsicht senkrecht zur Aussparungskante (10a, 11a, 12a) verlaufenden Querschnitt betrachtet, zur radialen Richtung unter einem Winkel (δ) von 0° bis 3,0°, insbesondere von bis zu 2,0°, bevorzugt von höchstens 1,0°, verläuft.

11. Fahrzeugreifen nach einem der Ansprüche 1 bis 10, **dadurch gekennzeichnet, dass** die längere Aussparung (11, 12) über den kompletten Einschnitt (7₁₂) verläuft oder dass die längere Aussparung (11, 12) nicht über den kompletten Einschnitt (7₃, 7₄) verläuft und vor der Reihenmittelinie (m_{R}) der Profilblockreihe (2, 2") endet.

12. Fahrzeugreifen nach einem der Ansprüche 1 bis 11, **dadurch gekennzeichnet, dass** in die längere Aussparung (11, 12) eine zur Umfangsrille (3, 4) beabstandete, von der Außenfläche (6a) der jeweiligen, blockartigen Profilstruktur (6, 6', 6") ausgehende, oberflächliche Nut (13) einmündet,
- welche eine insbesondere konstante Breite (b_{N}) von 0,50 mm bis 1,50 mm,
- in radialer Richtung eine insbesondere konstante Tiefe (t_{N}) von 0,50 mm bis 1,50 mm, vorzugsweise von 080 mm bis 1,20 mm, und
- eine auf die Nutmittelfläche (M_{N}) bezogene, in die Umfangsrichtung projizierte Länge (c_{N}) von 55% bis 90%, insbesondere von mindestens 65%, eines Abstands (a_{E}) aufweist, welcher zwischen den an die blockartige Profilstruktur (6, 6', 6") angrenzenden, einschnittartigen Querrillen (5₁, 5₂, 5₃, 5₄) in Umfangsrichtung ermittelt ist, und
- welche ferner, in Draufsicht betrachtet, bezüglich einer gerade sowie zwischen den Enden der Nutmittelfläche (M_{N}) verlaufenden Hilfslinie (H_{N}), zur Umfangsrichtung unter einem Winkel (θ) von 0° bis 30°, insbesondere von 10° bis 20°, verläuft.

13. Fahrzeugreifen nach einem der Ansprüche 1 bis 12, **dadurch gekennzeichnet, dass** einschnittartige Querrillen (5₄) vorgesehen sind, deren Einschnitte (7₄), in Draufsicht betrachtet, langgestreckt Z-artig verlaufen, insbesondere bezüglicher einer in Draufsicht in der Einschnittmittelfläche (M_{E}) liegenden, in radialer Richtung verlaufenden Drehachse drehsymmetrisch sind und sich jeweils aus zwei randseitigen Einschnittabschnitten (7₄ₐ) und einem die Reihenmittellinie (m_{R}) der Profilblockreihe (2") passierenden den Z-Mittelbalken bildenden, zentralen Einschnittabschnitt (7_{4b}) zusammensetzten, wobei die randseitigen Einschnittabschnitte (7₄ₐ) stärker zur Umfangsrichtung geneigt sind als zentrale Einschnittabschnitt (7_{4b}) und wobei die randseitigen Einschnittabschnitte (7₄ₐ) mit dem zentralen Einschnittabschnitt (7_{4b}) - bezogen auf die Einschnittmittelfläche M_{E} - jeweils einen Winkel (η) von vorzugsweise 130° bis 150° einschließen, wobei die kürzere Aussparung (10) über einen der randseitigen Einschnittabschnitte (7₄ₐ) und die längere Aussparung (12) über diesen randseitigen Einschnittabschnitt (7₄ₐ) und zumindest einen Abschnitt des zentralen Einschnittabschnitts (7_{4b}) verläuft.

14. Fahrzeugreifen nach einem der Ansprüche 1 bis 13, **dadurch gekennzeichnet, dass** die Einschnitte (7₁₂, 7₃, 7₄) der einschnittartigen Querrillen (5₁, 5₂, 5₃, 5₄) die Profilblockreihe (2, 2', 2") durchqueren, wobei die Profilblockreihe (2, 2", 2") vorzugsweise eine an jeder Seite von einer Umfangsrille (3, 4) begrenzte Profilblockreihe (2, 2", 2") ist.
